Europäisches Patentamt

European Patent Office

Office européen des brevets

(11) Veröffentlichungsnummer: **0 230 010 B1**

(12) **EUROPÄISCHE PATENTSCHRIFT**

(45) Veröffentlichungstag der Patentschrift: 06.03.91

(51) Int. Cl.⁵: **A61C 1/00**

(21) Anmeldenummer: 86117638.6

(22) Anmeldetag: 18.12.86

(54) **Zahnärztliches Gerät.**

(30) Priorität: 20.12.85 DE 3545496

(43) Veröffentlichungstag der Anmeldung:
29.07.87 Patentblatt 87/31

(45) Bekanntmachung des Hinweises auf die
Patenterteilung:
06.03.91 Patentblatt 91/10

(84) Benannte Vertragsstaaten:
**AT CH DE FR IT LI**

(56) Entgegenhaltungen:
**WO-A-81/01364**
**DE-A- 2 043 722**
**DE-B- 1 077 379**
**DE-B- 1 291 055**
**FR-A- 2 172 272**

(73) Patentinhaber: **Siemens Aktiengesellschaft**
**Wittelsbacherplatz 2**
**W-8000 München 2(DE)**

(72) Erfinder: **Fleer, Ernst Otto**
**Friedrich-Ebert-Strasse 35**
**W-6140 Bensheim(DE)**

## Beschreibung

Die Erfindung bezieht sich auf ein zahnärztliches Gerät enthaltend wenigstens ein Handstück, welches mittels Anschlußarmaturen mit einem flexiblen Versorgungsschlauch lösbar verbunden ist, der wenigstens einen Leitungskanal zur Führung eines fluiden Mediums an das Handstück enthält, und ein in Flußrichtung gesehen im Anschluß an den flexiblen Teil des Versorgungsschlauches in der Fluidleitung angeordnetes, selbsttätig wirkendes, bei aufbauendem Druck öffnendes und bei abfallendem Druck schließendes Ventil.

Bei zahnärztlichen Geräten sind die zur Steuerung der verschiedenen fluiden Medien (Luft, Wasser, Spray) für den Handstückbetrieb notwendigen Ventile, insbesondere die Absperrventile, in der Regel in einem dem Gerät zugeordneten Versorgungsteil untergebracht. Für die Zuleitung der Medien vom Gerät zu den Handstücken kommen aus Handhabungsgründen flexible Versorgungsschläuche zur Anwendung, und zwar entweder in Form von in einer gemeinsamen Umhüllung geführten Einzelschläuchen oder in Form eines Mehrkanalschlauches. Wegen der aus Handhabungsgründen vorzusehenden Flexibilität muß der die Medien führende Versorgungsschlauch in gewisser Weise elastisch sein. Dies bedeutet, daß, wenn der Versorgungsschlauch mit Druck beaufschlagt wird, sich dann sein Innenvolumen vergrößert. Nach Abschalten der Medienzufuhr über die im Gerät vorhandenen Ventile wird der Druck im Versorgungsschlauch über die Austrittsstelle am Handstück abgebaut. Je nach verwendetem Schlauchmaterial ändert sich sowohl der Innendurchmeser als auch die Länge des Leitungskanales und damit das Volumen des in diesem Leitungsabschnitt befindlichen Mediums. Dies hat bei Führung von Wasser (oder einer anderen Flüssigkeit) zur Folge, daß selbst bei abruptem Schließen des Absperrventils an der Austrittsstelle des Handstückes etwas Wasser nachspritzen kann. Um ein solches Nachspritzen zu verhindern, hat man sogenannte Rücksaugeinrichtungen vorgesehen (DE-C-10 77 379) oder die Abschaltventile selbst so ausgestaltet, daß nach dem Abschalten des Wassers eine bestimmte Wassersäule teilweise oder ganz bis in das Gerät hinein zurückgesaugt wird. Nachdem die notwendige Rücksaugmenge von einer Reihe von Faktoren abhängt, beispielsweise abhängig ist vom Druck im Wasserkanal, von der Elastizität des Schlauchmaterials bzw. des Leitungskanals in dem das Wasser geführt wird, vom Durchmesser und der Länge des Schlauches bzw. des Leitungskanals, ist sicherzustellen, daß auch bei ungünstigen Toleranzen ein Nachspritzen noch verhindert wird. In der Praxis bedeutet dies, daß das Rücksaugvolumen stets größer sein muß als die größtmögliche Volumenänderung des Wasserkanals.

Problematisch bei der Führung fluider Medien allgemein und im speziellen bei Flüssigkeiten, und dort insbesondere in Verbindung mit der vorerwähnten Rücksaugung, ist, daß bei Präparationen im Patientenmund über das benutzte Handstück Keime in die Medienkanäle des Versorgungsschlauches gelangen können. Dies soll beim Stand der Technik (WO-A-81 01 364) dadurch verhindert werden, daß in einem achsparallel verlaufenden Wasser- oder Spraywasserleitungskanal des Handstückes ein Rückschlagventil in Form einer federbelasteten Kugel angeordnet ist. Wenngleich mit einem solchen Rückschlagventil ein Zurücksaugen von eventuell kontaminiertem Wassers in die Zuleitung verhindert werden kann, so gibt, wegen des dort nicht näher festgelegten Ortes, an dem das Ventil angeordnet sein soll, der Stand der Technik keine Gewähr dafür, daß bei abgenommenem Handstück über den schlauchseitigen Anschluß das Eindringen von Keimen von außen verhindert werden kann. Desgleichen besteht beim Stand der Technik keine Möglichkeit, die geräte- und schlauchseitigen Leitungswege mit Desinfektionsmitteln wirksam zu entkeimen.

Der im Anspruch 1 angegebenen Erfindung liegt die Aufgabe zugrunde, bei einem Gerät der eingangs genannten Gattung dafür zu sorgen, daß eine Keimbildung in den geräte- und schlauchseitigen Leitungswegen wirksam verhindert werden kann, und zwar unabhängig davon, ob am Versorgungsschlauch ein Handstück angeschlossen ist oder nicht, und daß ferner eine Möglichkeit gegeben ist, eine wirksame Abtötung der Keime innerhalb der Leitungswege bis zum Handstück zu erzielen.

Dadurch, daß das selbsttätig wirkende Ventil an der unmittelbaren Übergabestelle des Mediums derjenigen Anschlußarmatur, welche die Trennstelle zum lösbaren Handstück bildet, angeordnet ist, ist sichergestellt, daß bei abgenommenem Handstück, z.B. zum Zwecke einer Sterilisation, der am Gerät verbleibende Medienkanal gegen Eindringen von Keimen geschützt ist. Bei aufgesetztem Handstück wird das Eindringen von Flüssigkeit in den Wasserkanal über die Eintrittsdüse durch Kapillarwirkung bzw. Schwerkraft nach beendeter Präparation ebenfalls wirksam vermieden. In Verbindung mit der Desinfektionseinrichtung ist sichergestellt, daß bei einer Desinfektion nach Einfüllen einer Desinfektionslösung diese in den gesamten Wasserwegen bis zur Austrittsstelle am Handstück über den gesamten gewünschten Einwirkunszeitraum im Leitungssystem verbleiben kann, die Medienkanäle also bis zum Ventil mit Desinfektionslösung gefüllt bleiben.

Sofern eine Rücksaugeinrichtung vorhanden ist, beschränkt sich das Rücksaugen des Wassers auf den elastischen Teil des Schlauches, d.h. die Rücksaugeinrichtung übernimmt praktisch nur die Volumenänderung des Wasserkanals nach dem Abschalten. Ein Rücksaugen aus dem Handstück erfolgt nicht, d.h. das Handstück und der in der Regel nicht sterilisierbare Versorgungsschlauch sind so gegen Eindringen von eventuell mit Keimen behaftetem Wasser wirksam geschützt.

Bei Handstücken, die mit dem zugehörigen Versorgungsschlauch unverdrehbar miteinander verbunden sind, die also eine kombinierte Steck-/Schraubverbindung aufweisen, ist es vorteilhaft, das Ventil vorzugsweise am Ende eines achsparallel verlaufenden Leitungskanals der Anschlußarmatur anzuordnen. Bei Handstücken, die mittels einer sogenannten Drehkupplung mit dem Versorgungsschlauch verbunden sind, bei denen also das Handstück während des Gebrauchs gegenüber der Anschlußarmatur frei drehbar ist, wobei in jeder beliebigen Drehstellung eine Medienübergabe vom Versorgungsschlauch auf das Handstück gegeben ist, ist es vorteilhaft, die meistens radial mündende Austrittsöffnung für das Medium an der Kupplungsstelle durch ein gummielastisches Teil, vorteilhafterweise durch einen Gummiring od.dgl., abzudecken. Die Spannkraft des gummielastischen Teils ist dabei so zu bemessen, daß bei aufbauendem Druck die Austrittsöffnung an der Kupplungsstelle freigegeben wird, so daß das Medium ungehindert vom einen zum anderen Teil der Kupplung übertreten kann, andererseits bei Abschalten des Mediums die Öffnung sofort verschließt. Dadurch, daß bei diesem Ventil das den Verschlußkörper des Ventils bildende gummielastische Teil praktisch einen Abschnitt der Mantelfläche des Zapfens bildet, ist eine mögliche Keimbildung auf die äußere Mantelfläche des Zapfens beschränkt; diese Oberfläche kann aber sehr leicht durch Besprühen mit Desinfektionslösung oder Eintauchen des Zapfens in Desinfektionslösung keimfrei gehalten werden. Der Verschluß kann außerdem äußerst leicht ausgewechselt werden.

Weitere Vorteile dieser Ventilausführung sind, daß die bisher verwendeten Anschlußarmaturen nicht nennenswert konstruktiv verändert zu werden brauchen, daß das Ventil leicht zugänglich ist und daß seine Wirkung unabhängig ist vom Vorhandensein bzw. vom Typ des auf die Anschlußarmatur aufgesetzten Handstückes.

Anhand der Zeichnung werden mehrere Ausführungsbeispiele der Erfindung näher erläutert.

Es zeigen:
Figur 1 ein zahnärztliches Gerät mit mehreren, an Versorgungsleitungen gebundenen Handstücken in einer schaubildlichen Darstellung,
Figur 2 das in Figur 1 gezeigte Gerät im Schnitt entlang der Linie II/II in Figur 1,
Figur 3 das rückwärtige Ende des mit Position 4 in Figur 1 bezeichneten Handstückes in schaubildlicher Darstellung,
Figur 4 das zu dem Handstück nach Figur 3 passende Gegenstück eines Versorgungsschlauches,
Figur 5 eine erste Variante eines Handstückes mit Elektromotorantrieb,
Figur 6 den einen Teil einer zweiten Variante eines Handstückes mit Elektromotorantrieb,
Figur 7 den anderen Teil der zweiten Handstückvariante,
Figur 8 den Elektromotorantrieb als Einzelteil,
Figur 9 einen Kupplungskörper passend zu den Teilen nach Figuren 8 und 10,
Figur 10 eine zum Elektromotorantrieb nach Figur 8 passende Anschlußarmatur,
Figur 11 die in Figur 10 dargestellte Anschlußarmatur im Längsschnitt,
Figur 12 einen Ausschnitt aus Figur 11 mit einer anderen Ventilausführung,
Figur 13 einen Teil des in Figur 9 dargestellten Kupplungskörpers im Längsschnitt,
Figur 14 ein Blockschaltbild zur Steuerung einer Einrichtung zur Desinfektion der Wasserwege zu den Handstücken.

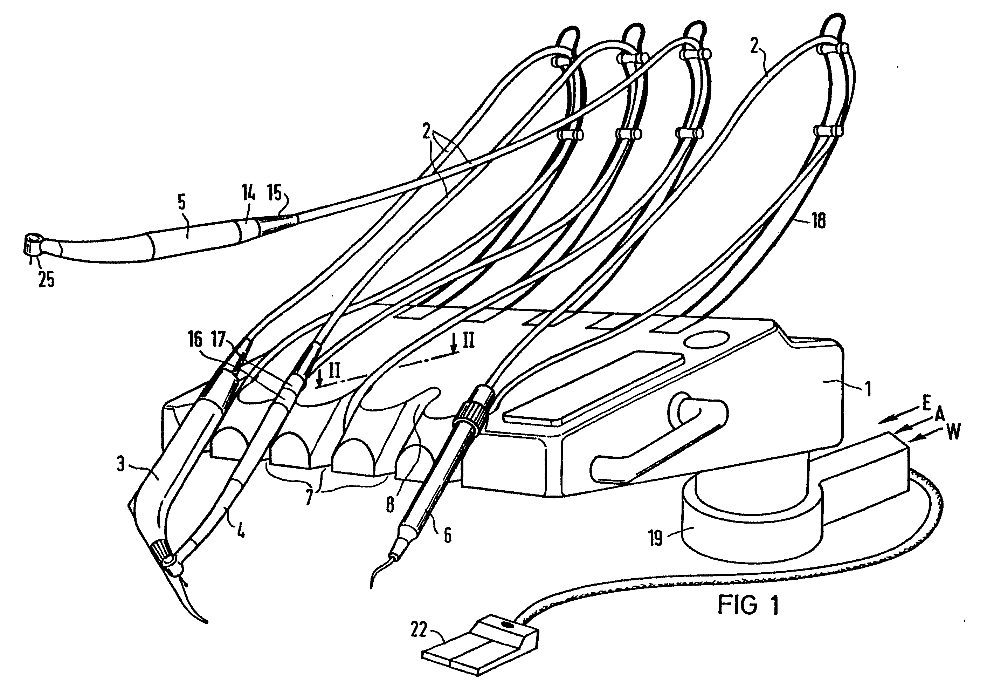

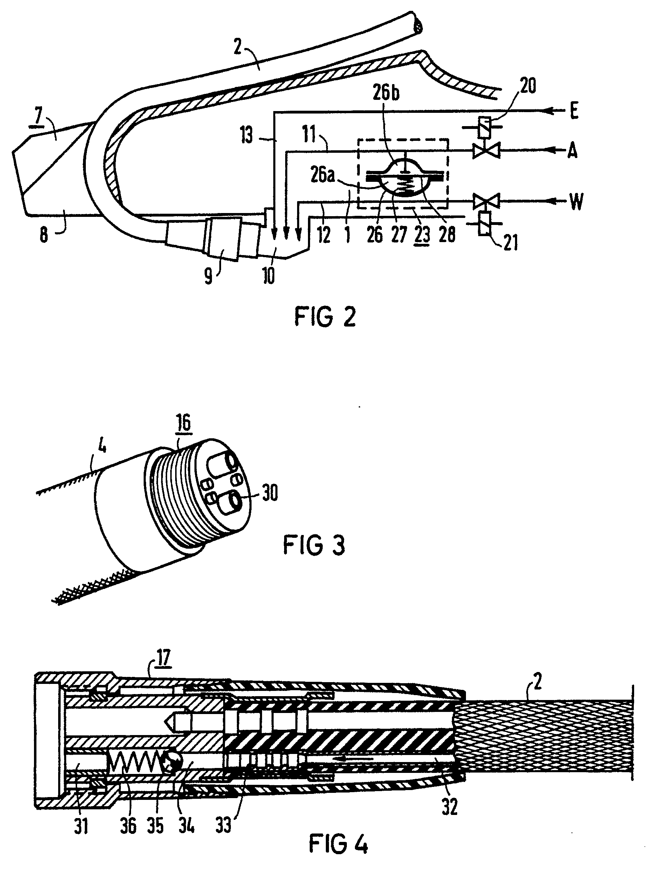

Die Figur 1 zeigt in einer schaubildlichen Darstellung ein zahnärztliches Gerät mit einem pultförmigen Gehäuse 1, an dem mehrere, an Versorgungsleitungen 2 gebundene zahnärztliche Handstücke 3 bis 6 gehaltert sind. Bei den Handstücken handelt es sich von links nach rechts gesehen um ein Spritzhandstück 3, ein Turbinenhandstück 4, ein Elektromotorhandstück 5 und ein Handstück zur Zahnsteinentfernung 6. Zur Halterung der Handstücke in der Nichtgebrauchslage (Handstücke 3, 4, 6) sind am Gehäuse 1 schräg angeordnete Ablagevorrichtungen 7 in Form von mulden- bzw. schlitzförmigen Vertiefungen 8 vorgesehen. Die Versorgungsleitungen 2 sind mittels an der Unterseite des Gerätes (Figur 2) angeordneter Anschlußarmaturen 9, 10 in bekannter Weise mit den notwendigen Zuleitungen 11 bis 13 für die Medien Luft (A), Wasser (W) und elektrischer Strom (E) verbunden. Die Handstücke 3 bis 6 sind mit den zugehörigen Versorgungsleitungen 2 mittels ähnlicher, instrumentenseitiger Anschlußarmaturen verbunden, von denen in den nachfolgenden Figuren nur diejenigen für die Handstücke 4 (mit den Pos. 16/17) und 5 (mit den Pos. 14/15) bezeichnet sind.

Nachdem die Art der Darreichung der Handstücke bzw. Rückholung der Versorgungsleitungen für die Erfindung unwesentlich ist, sei an dieser Stelle nur vermerkt, daß die Versorgungsleitungen in an sich bekannter Weise über sogenannte "Peitschenhalterungen" 18 abgestützt sind, die es ermöglichen, die Versorgungsleitungen rasch in eine Gebrauchs- und bei Nichtgebrauch des Handstückes in eine Ruheposition zu bringen.

Die Zuleitungen 11 bis 13 für Luft, Wasser und elektrischen Strom sind in an sich bekannter Weise je nach Ausführung des Gerätes über beispielsweise einen Tragarm 19 in das Gerät hineingeführt. Im Gerät selbst sind (Fig. 2) Elektromagnetventile 20,21 zur Steuerung der Medien Luft und Wasser vorgesehen, die beispielsweise mittels eines Fußschalters 22 betätigt werden können. Im Gerät ist ferner für jedes Handstück eine allgemein mit 23 bezeichnete Einrichtung vorhanden, mittels der zur Vermeidung eines Nachtropfens von Wasser an der Austrittsstelle eines Handstückes, beispielsweise an der in Figur 1 mit 25 beim Handstück 5 bezeichneten Austrittsstelle für Spray zur Kühlung der Präparationsstelle, ein Rücksaugen wenigstens eines Teils des im Wasserkanal befindlichen Wassers nach Abschalten der wasserzufuhr erreicht wird. Eine einfache Ausführungsform einer solchen Einrichtung kann z.B. bestehen aus einem Gehäuse 26 und aus einer durch eine Druckfeder 27 belastete Membran 28, die das Gehäuse in eine mit der Wasserleitung 12 verbundene Kammer 26a und eine mit der Luftleitung 11 verbundene Kammer 26b unterteilt. Die Steuerung der beiden Ventile 20, 21 erfolgt so, daß nach Abschalten von Luft und Wasser durch die Druckfeder 27 das Volumen der Kammer 26a gegenüber der Kammer 26b vergrößert wird, wodurch ein Rücksaugen des Wassers im Leitungsweg zwischen Handstück und Rücksaugeinrichtung erfolgt.

Um die Rücksaugung des Wassers auf das Handstück bzw. auf die handstückseitige Anschlußarmatur (14/15; 16/17 in Figur 1) zu begrenzen, also ein weiteres Rücksaugen des Wassers in die Kanäle der Versorgungsleitung 2 zu verhindern, ist zusätzlich zu den vorgesehenen Absperrventilen noch ein selbsttätig wirkendes Ventil vorgesehen, welches in Flußrichtung gesehen unmittelbar nach dem flexiblen Teil eines Versorgungsschlauches in dem betreffenden Wasserweg angeordnet ist, und zwar so, daß die Öffnung bei aufbauendem Wasserdruck freigegeben, dagegen bei abfallendem Wasserdruck geschlossen wird.

Im folgenden sei angenommen, daß das Handstück 4 (Turbinenhandstück) ein Handstück sei, das mittels einer Steck-/Schraubverbindung, das Handstück 5 dagegen mittels einer sogenannten Drehkupplung mit dem betreffenden Versorgungsschlauch verbunden ist.

Die Figur 3 zeigt das rückwärtige Ende des Handstückes 4. Die dort vorhandene Anschlußarmatur 16 enthält für das Medium Wasser ein vorstehendes Anschlußröhrchen 30, welches im gekuppelten Zustand in eine dazu passende Anschlußbuchse 31 der schlauchseitigen Anschlußarmatur 17 eingreift. Entsprechendes gilt für die übrigen Medien, deren Anschlußteile hier nicht näher bezeichnet sind.

Der das Wasser führende Leitungskanal 32, der entweder ein Kanal eines flexiblen Mehrkanalschlauches oder ein zusammen mit weiteren Einzelschläuchen in einem gemeinsamen Umhüllungsschlauch gefaßter Einzelschlauch sein kann, endet in einem festen Anschlußnippel 33. In dem zwischen der Buchse 31 und dem Anschlußnippel 33 befindlichen Kanalabschnitt 34 ist ein federbelastetes Kugelventil 35 angeordnet, welches in Flußrichtung (Pfeil) öffnet und mittels einer entsprechend eingestellten Druckfeder 36 bei Abfallen des Druckes schließt. Damit ist sichergestellt, daß nach Abschalten der Wasserzufuhr vom Handstück aus keine Flüssigkeit in den Versorgungsschlauch 2 zurückfließen kann. Das Ventil ist so eingestellt, daß die Rücksaugeinrichtung 23 zwar Wasser zurücksaugen kann, jedoch nur in einer Menge, die der Volumenänderung im Leitungskanal des Schlauches entspricht.

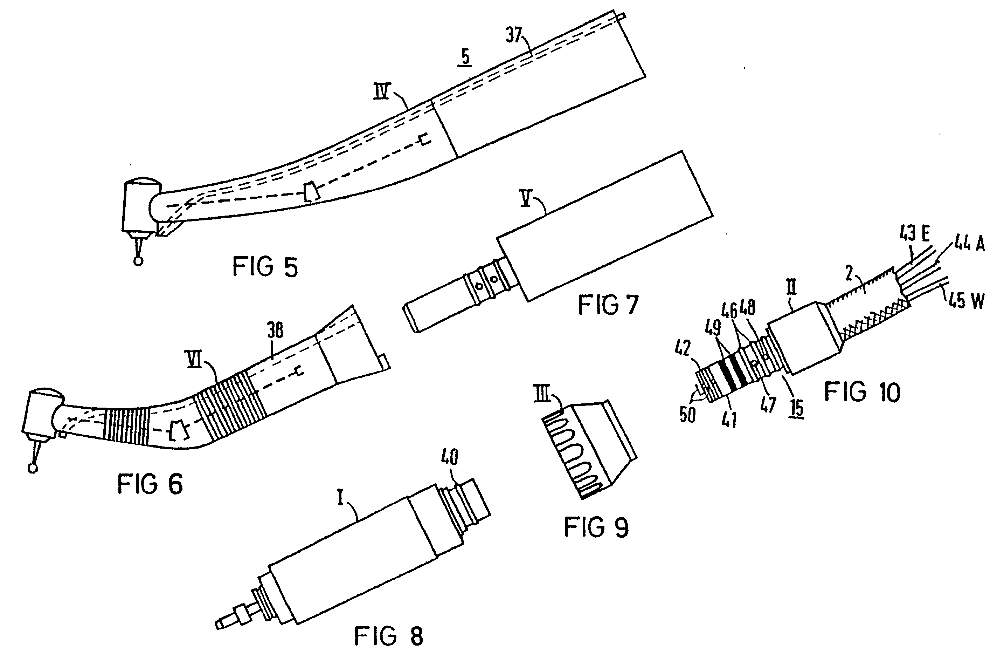

Wie bereits erwähnt, sei angenommen, daß das Handstück 5 (Handstück mit Elektromotorantrieb) mittels einer sogenannten Drehkupplung mit dem zugehörigen Versorgungsschlauch verbunden ist. Die nachfolgenden Figuren 5 bis 10 zeigen Möglichkeiten einer Ausgestaltung eines solchen Handstückes und der zugehörigen Drehkupplung. Grundelement eines solchen Handstückes ist die in Figur 8 mit I bezeichnete Motorpatrone, die mit der in Figur 10 mit II bezeichneten Anschlußarmatur des Versorgungs Versorgungsschlauches 2 drehfest verbindbar ist. Hierzu enthält die Motorpatrone I einen hülsenförmigen Ansatz 40, in den ein Zapfen 41 des Anschlußteiles II teilweise eingreift und mittels einer Schraubverbindung 42 fest (unverdrehbar) mit der Motorpatrone verbindbar ist. Am Zapfen 41 des Anschlußteiles II enden die im Versorgungsschlauch 2 herangeführten Zuleitungen 43 bis 45 für einerseits elektrische Energie (E) und andererseits Luft (A) und Wasser (W). Die Luft- und Wasserleitungen münden in bekannter Weise an meist radialen, am Zapfenumfang angeordneten, durch O-Ringe 46 gegeneinander abgedichteten Öffnungen 47, 48. Die elektrischen Leitungen enden am Zapfen 41 einerseits an einem Schleifringpaar 49 und andererseits an einem stirnseitig des Zapfens angeordneten Kontaktpaar 50. Das Schleifringpaar 49 dient zur Zufuhr elektrischer Energie an eine im Kupplungskörper angeordnete Lampe einer nicht näher erläuterten Beleuchtungseinrichtung, das Kontaktpaar zur Zufuhr der notwendigen Spannung an den in der Motorpatrone I angeordneten Elektromotor.

Bevor die Anschlußarmatur II mit der Motorpatrone I verschraubt wird,wird der in Figur 9 gezeigte Kupplungskörper III auf den Ansatz 40 angesetzt und axial fixiert. Der Kupplungskörper III übernimmt die Medien Luft, Wasser und elektri-

schen Strom vom Kupplungszapfen 41 und gibt sie dann achsparallel weiter an die auf die Motorpatrone I aufzusetzenden Handstückteile. Diese können entweder ein Adapter, wie in Figur 7 mit V bezeichnet, sein, auf den ein Hand- und Winkelstück VI entsprechend Figur 6 aufsetzbar ist oder auch ein in Figur 5 mit IV bezeichnetes Handstück mit motorübergreifender Hülse sein. Dies bedeutet, daß im montierten Zustand, also nach Aufsetzen des Kupplungskörpers (III) auf die Motorpatrone I und anschließendem Verschrauben der Anschlußarmatur II mit der Motorpatrone I, auf dies alternativ entweder das in Figur 5 gezeigte Handstück IV oder der in Figur 7 mit V bezeichnete Adapter axial aufgesetzt und mittels einer nicht näher erläuterten Schnellrasteinrichtung, gegen axiales Abgleiten gesichert, gerastet werden kann. Im gekuppelten Zustand sind die Teile IV oder V drehfest mit dem Kupplungskörper III verbunden, können also gemeinsam mit diesem gegen die Motorpatrone I verdreht werden. Während es sich bei dem Handstück nach Figur 5 um ein einteiliges Handstück handelt, bei welchem im Anschluß an die Griffhülse eine die Motorpatrone übergreifende Hülse vorgesehen ist, bestehen die Handstückteile gemäß Figuren 6 und 7 aus wenigstens zwei Teilen, dem Adapter (V) und dem sogenannten Hand- und Winkelstück (VI).

Nachdem der konstruktive Aufbau dieser Handstückteile für die Erfindung nicht wesentlich ist, sollen diese Teile nicht näher erläutert werden. Eine nähere Beschreibung dieser Handstückteile ist aus der Patentanmeldung P 34 41 024.4 zu entnehmen.

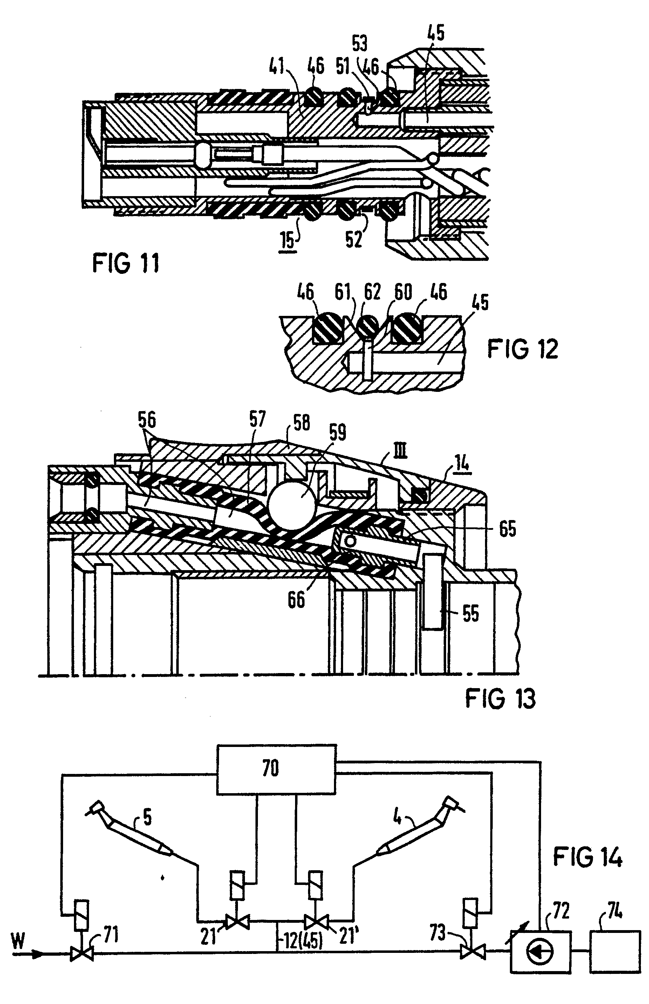

Wesentlich für die vorliegende Erfindung dagegen ist die Anordnung eines Rückschlagventils unmittelbar an der Medienaustrittsstelle des Zapfens 41, der in Figur 11 im Längsschnitt dargestellt ist. Das Rückschlagventil wird gebildet durch ein gummielastisches Teil 51, welches in einer Ringnut 52 des Zapfens 41 so eingelegt ist, daß es bei nicht vorhandenem Wasserdruck den radial mündenden Kanal 53 der Wasserzuführungsleitung 45 verschließt. Die Elastizität des Teiles 51 ist so gewählt, daß bei sich aufbauendem Wasserdruck das Teil von der Öffnung abhebt und so den Wasserdurchtritt vom Zapfen 41 auf den das Medium weiterführenden Leitungsabschnitt im Kupplungskörper III freigibt. Zu diesem Zweck ist das Teil 51 etwas schmäler ausgeführt als die zur Aufnahme vorgesehene Ringnut 52. Zur Übernahme bzw. Weiterleitung des Mediums ist im Kupplungskörper III ebenfalls eine Ringnut 55 (Fig. 13) oder eine radiale Bohrung vorgesehen, die mit einem im Kupplungskörper III eingelegten, schräg, also unter einem Winkel zur Achsrichtung, verlaufenden Leitungsabschnitt 56 verbunden ist, der durch einen quetschbaren Schlauch 57 gebildet ist. Der Schlauch 57 ist Teil eines Dosierventils, bei dem durch Drehen eines äußeren Stellringes 58 über eine Exzenterfläche und eine Druckkugel 59 der Durchflußquerschnitt begrenzt werden kann. Vom Kupplungskörper III aus wird das Wasser über eine an sich bekannte, achsparallele, in den Figuren 5 und 6 angedeutete, mit den Positionen 37 und 38 bezeichnete Leitungsführung an die Austrittsstelle des Handstückes geleitet.

Die Figure 12 zeigt eine Alternativlösung zu der in Figur 11 gezeigten Konstruktion. Anstelle einer radial mündenden Öffnung ist im Zapfen 41 ein quer zur Längsrichtung verlaufender, beispielsweise durch eine Einfräsung gebildeter Schlitz 60 vergesehen, der eine Verbindung mit dem Zufuhrkanal 45 herstellt. Der Schlitz 60 mündet in eine V-förmige Ringnut 61, an deren Wandungen ein als Schließelement dienender O-Ring 62 anliegt. Die Flexibilität des O-Rings ist so gewählt, daß bei sich aufbauendem Wasserdruck der O-Ring von den V-förmigen Wänden der Nut 61 abheben und bei abfallendem Druck sich wieder anlegen kann, wodurch ein Rückfließen des Wassers in den Versorgungsschlauch hinein verhindert wird. Die Stärke des O-Ringes und die Tiefe des Nutgrundes der V-förmigen Nut sind dabei so bemessen, daß im abgehobenen Zustand des O-Ringes bei dem üblichen Betriebsdruck ein ausreichender Durchflußquerschnitt bei freier Drehbarkeit der Kupplungsteile gegeben ist.

Das den Rückfluß des Wassers in den Versorgungsschlauch 2 verhindernde Ventil kann auch im quetschbaren Schlauch 57 des Kupplungskörpers III angeordnet sein, wie dies in FIG 13 eingezeichnet ist. Hierzu ist im Schlauchabschnitt 57 ein aus festem Material bestehendes Einsatzteil 65 vorgesehen, welches an der einen Stirnseite geschlossen ist und am Umfang eine der maximalen Durchflußmenge entsprechende Öffnung 66 enthält. Der Durchmesser im Bereich der Öffnung 66 ist mit dem Innendurchmesser des Schlauchabschnittes in diesem Bereich so abgestimmt, daß bei einem bestimmten, sich aufbauenden Wasserdruck der Schlauch im Bereich der Öffnung vom Einsatzteil leicht abhebt, wodurch die zuvor geschlossene Öffnung 66 freigegeben wird. Eine leichte Zugänglichkeit zu dem Ventil ist durch den patronenartig auswechselbar gehalterten Schlauchabschnitt gegeben.

Die vorbeschriebene Ventilanordnung hat den Vorteil, daß die Wirkung unabhängig ist vom Typ des aufgesteckten Handstückes, daß das Ventil bei Bedarf sehr gut zugänglich ist und daß das gummielastische Teil leicht auswechselbar ist.

Wie aus den vorbeschriebenen Ausführungsbeispielen hervorgeht, ist es für die Erfindung wesentlich, daß das den Rückfluß verhindernde Ventil nicht an der Anschlußarmatur des abnehmbaren Teiles, also des Handstückes, sondern an der Anschlußarmatur desjenigen Teiles angeordnet ist, welches beim Wechseln des Handstückes am Versorgungsschlauch verbleibt. Das Ventil ist dabei an der unmittelbaren Übergabestelle des Mediums von dieser Anschlußarmatur zur Anschlußarmatur des abnehmbaren Handstückes angeordnet.

Das anhand der FIG 11/12 beschriebene Ventil kann auch am Kupplungszapfen eines mit dem Versorgungsschlauch drehfest verbundenen Antriebsteiles angeordnet sein. Ein solches Antriebsteil besteht praktisch Gen in FIG 7 und 8 dargestellten, jedoch zu einer Baueinheit zusammengefaßten, mit dem Versorgungsschlauch verbundenen Teilen . Das Ventil wäre dann in dieser Ausführung an dem (in der Zeichnung nicht näher bezeichneten) Kupplungszapfen des Teiles V angeordnet, auf den üblicherweise Hand- und Winkelstücke, wie in FIG 6 mit VI bezeichnet, aufsetzbar sind.

Anhand der Figur 14 wird eine Einrichtung zur Desinfektion der Wasserwege zu den einzelnen Handstücken näher erläutert.

Mittels einer Ablaufsteuereinrichtung 70 wird einerseits ein geräteeingangsseitig angeordnetes Absperrventil 71 und anderer-seits die zu den Handstücken 4, 5 führenden Ventile 21 und 21' sowie eine Dosiereinrichtung 72 mit Ventil 73, mittels der aus einem mit Desinfektionsmittel gefüllten Behälter 74 in die Wasserzuleitung 12 bzw. 45 zu den einzelnen Handstücken in bestimmter Menge Desinfektionsmittel eingebracht werden kann, so gesteuert, daß nach Absperren der Wasserzufuhr die Wasserwege mit Desinfektionsmittel gefüllt und nach Ablauf einer bestimmten Einwirkzeit die Wasserzufuhr wieder eingeschaltet und das Desinfektionsmittel aus den Wasserwegen verdrängt wird. Durch die vorbeschriebene Anordnung des Ventils ist gewährleistet, daß die Desinfektionslösung über den gesamten Einwirkungszeitraum bis zur Düse vorhanden ist.

## Ansprüche

1. Zahnärztliches Gerät, enthaltend wenigstens ein Handstück (3 bis 6), welches mittels Anschlußarmaturen (14, 15; 16, 17) mit einem flexiblen Versorgungsschlauch (2) lösbar verbunden ist, der wenigstens einen Leitungskanal (32, 34, 45, 56) zur Führung eines fluiden Mediums an das Handstück enthält, und ein in Flußrichtung gesehen, im Anschluß an den flexiblen Teil (32, 45) des Versorgungsschlauches (2) angeordnetes, selbsttätig wirkendes, bei aufbauendem Druck öffnendes und bei abfallendem Druck schließendes Ventil (35; 51, 52; 61, 62; 65, 66), **dadurch gekennzeichnet,** daß das selbsttätig wirkende Ventil (35; 51, 52; 61, 62) an der unmittelbaren Übergabestelle des Mediums derjenigen Anschlußarmatur (15; 17), welche die Trennstelle zum lösbaren Handstück (3 bis 6) bildet, angeordnet ist, daß ferner eine Einrichtung zur Desinfektion der Wasserwege vorgesehen ist, mit einer Dosiereinrichtung (72), mit deren Hilfe Desinfektionsmittel aus einem Behälter (74) in die Wasserwege eingebracht werden kann, und daß eine Ablaufsteuereinrichtung (70) vorgesehen ist, mit der einerseits ein die Zufuhr des Wassers unterbrechendes Absperrventil (71) und andererseits ein die Zufuhr des Desinfektionsmittels steuerndes Ventil (73) so ansteuerbar sind, daß während der Zufuhr des Desinfektionsmittels die Zufuhr des Wassers unterbrochen ist und nach einer bestimmten Einwirkzeit die Unterbrechung aufgehoben wird, wodurch das Desinfektionsmittel unter Frischwasserzufuhr wieder aus.den Wasserwegen verdrängt wird.

2. Gerät nach Anspruch 1, **daurch gekennzeichnet,** daß das Ventil (35) in einem achsparallel verlaufenden Leitungsabschnitt (34) der Anschlußarmatur (17) des Versorgungsschlauches (2) angeordnet ist.

3. Gerät nach Anspruch 1, **dadurch gekennzeichnet,** daß das Ventil (51,52;61,62) in einem radial an der Anschlußarmatur (15) des Versorgungsschlauches mündenden Leitungsabschnitt (53,60) angeordnet ist.

4. Gerät nach Anspruch 3, **dadurch gekennzeichnet,** daß das Ventil (51, 52; 61, 62) durch ein die Öffnung des Leitungsabschnittes (53, 60) verschließendes gummielastisches Teil (51, 62) gebildet ist, welches am Umfang eines den einen Teil einer Drehkupplung bildenden Zapfens (41) angeordnet ist.

5. Gerät nach Anspruch 4, **dadurch gekennzeichnet,** daß das gummielastische Teil (51, 62) in einer Ringnut (52, 61) des Zapfens (41) eingelegt ist, in die auch der Leitungsabschnitt (45, 53, 60) mündet.

6. Gerät nach Anspruch 5, **dadurch gekennzeichnet,** daß eine V-förmige Ringnut (61) vorgesehen ist, an deren Wandungen ein O-Ring (62) anliegt.

7. Gerät nach Anspruch 1, **dadurch gekennzeichnet,** daß das Ventil (65, 66) im Leitungskanal (56) eines dem Handstück (3 bis 6) zugeordneten Dosierventils (57 bis 59) angeordnet ist, mit dem die Durchflußmenge des Wassers zum Handstück gesteuert werden kann.

8. Gerät nach Anspruch 7, **dadurch gekennzeichnet**, daß ein Dosierventil mit einem quetschbaren und damit im Durchflußquerschnitt veränderbaren Schlauch (57) vorgesehen it, und im Schlauch ein mit einer zylindrischen Mantelfläche versehenes Einsatzteil (65) aus unnachgiebigem Material angeordnet ist, dessen in Flußrichtung gesehen zweite Stirnseite geschlossen ist und dessen Mantelfläche eine Öffnung (66) enthält, welche bei druck, loser Leitung durch die Innenwandung des Schlauches (57) verschlossen ist und bei ansteigendem Druck infolge der Elastizität des Schlauches freigegeben wird.

9. Gerät nach Anspruch 1, **dadurch gekennzeichnet**, daß das Ventil (35; 51, 52; 61, 62; 65, 66) im Leitungsabschnitt einer Flüssigkeitsleitung (W) angeordnet ist, in der eine Einrichtung (23) vogesehen ist, mit der zur Vermeidung eines Nachtropfens von Flüssigkeit an der Austrittsstelle des Handstückes nach Abschalten der Flüssigkeitszufuhr ein Rücksaugen eines Teils der im Versorgungsschlauch befindlichen Flüssigkeit erreicht wird.

## Claims

1. A dental apparatus containing at least one handpiece (3 to 6) which is connected in a detachable manner by means of connecting fittings (14,15;16,17) with a flexible supply tube (2), which comprises at least one duct (32,34,45,56) for guiding a liquid medium to the hand piece and, as seen in the direction of flow, an automatically acting valve (35;51,52;61,62;65,66) is arranged connected to a flexible part (32,45) of the supply tube (2), the valve being constructed to open with increasing pressure and close with reducing pressure, characterised in that the automatically acting valve (35; 51, 52; 61, 62) is arranged at the direct point of transfer of the medium to the connecting fitting (15;17) which forms the dismantling point to the detachable handpiece (3 to 6), in that furthermore a device, with a dosing unit (72), is provided for disinfecting the water paths, with the aid of which device disinfecting means can be brought from a container (74) into the water paths, and in that an outlet control unit (70) is provided, with which, on the one hand, a shutoff valve (71) for interrupting the supply of the water and, on the other hand, a valve (73) for controlling the supply of the disinfecting means, are able to be controlled, in that during the supply of the disinfecting means the supply of the water is interrupted and after a fixed operating time the interruption is cancelled, whereby the disinfecting means is removed again from the water paths, with there being fresh water supply.

2. An apparatus according to claim 1, characterised in that the valve (35) is arranged in an axially parallel extending line section (34) of the connecting fitting (17) of the supply tube (2).

3. An apparatus according to claim 1, characterised in that the valve (51, 52;61, 62) is arranged in a line section (53, 60) leading radially into the connecting fitting (15) of the supply tube (2).

4. An apparatus according to claim 3, characterised in that the valve (51, 52; 61, 62) is formed by a rubber part (51, 62) sealing the opening of the line section (53, 60), which part is arranged on the periphery of a plug (41) forming one part of a rotational coupling.

5. An apparatus according to claim 4, characterised in that the rubber part (51, 62) is laid in an annular groove (52, 61) of the plug (41), into which the line section (45,53,60) also opens.

6. An apparatus according to claim 5, characterised in that a V-shaped annular groove (61) is provided, on the walls of which an O-ring (62) rests.

7. An apparatus according to claim 1, characterised in that the valve (65,66) is arranged in the duct (56) of a dosing valve (57 to 59), with which the quantity of through-flow water to the handpiece can be controlled.

8. An apparatus according to claim 7, characterised in that a dosing valve is provided with a squeezable tube (57) and thus is alterable in the through flow cross-section (57) and arranged in the tube there is an insert part (65) of inflexible material provided with a cylindrical surface, the second end face of which insert part is closed in the flow direction and the surface of which contains an opening (66), which is sealed with a pressureless duct by the inner wall of the tube (57) and is released with increasing pressure, as a result of the elasticity of the tube.

9. An apparatus according to claim 1, characterised in that the valve (35; 51, 52;61,62;65,66), is arranged in the line section of a liquid line (W), in which a device (23) is provided, for a return flow of a part of the liquid located in the supply tube, in order to avoid the liquid dripping at the outlet point of the hand piece after disconnecting the liquid supply.

**Revendications**

1. Appareil de dentisterie comportant au moins une pièce à main (3 à 6) reliée de façon détachable, à l'aide de raccords (l4,l5;l6,17), à un tuyau d'alimentation flexible (2) qui contient au moins un canal (32,34,45,56) pour le passage d'un milieu fluide à la pièce à main et, en regardant dans le sens de l'écoulement, disposée dans le raccord de la partie flexible (32,45) du tuyau d'alimentation (2), une soupape à action automatique (35;51;52;61,62,65,66), qui s'ouvre lors de l'établissement de la pression et qui se ferme pour une pression décroissante, caractérisé par le fait que la soupape à action automatique (35;5l;52;61,62) est disposée directement à l'emplacement de passage du milieu du raccord (15;17) qui constitue l'emplacement de séparation avec la pièce à main détachable (3 à 6), qu'il est, en outre, prévu un agencement pour désinfecter les voies de passage de l'eau, pourvu d'un dispositif de dosage (72) à l'aide duquel le produit désinfectant peut être introduit, à partir d'un réservoir (74), dans lesdites voies de passage de l'eau, et qu'il est prévu un dispositif de contrôle de l'écoulement (70) à l'aide duquel on peut contrôler de telle manière, d'une part, une soupape d'arrêt (71) qui interrompt l'amenée de l'eau, et, d'autre part une soupape (73) qui contrôle l'amenée du produit de désinfection, que pendant l'amenée du produit désinfectant, l'amenée de l'eau est interrompue et qu'après une durée d'action déterminée, cette interruption est supprimée, grâce à quoi le produit désinfectant est à nouveau chassé des voies de passage de l'eau par suite de l'alimentation d'eau fraîche.

2. Appareil selon la revendication 1, caractérisé par le fait que la soupape (35) est disposée dans une section de conduite (34), qui s'étend parallèlement à l'axe, du raccord (17) du tube d'alimentation (2).

3. Appareil selon la revendication 1, caractérisé par le fait que la soupape (5l,52;61,62) est disposé dans une section de conduite (53;60) qui débouche radialement dans le raccord (15) de la conduite d'alimentation (2).

4. Appareil selon la revendication 3, caractérisé par le fait que la soupape (51,52;61,62) est constituée par un élément (51,62), présentant l'élasticité du caoutchouc et obturant l'ouverture de la section de conduite (53,60), lequel élément est agencé à la périphérie d'un embout (41) qui constitue un élément d'un accouplement à rotation.

5. Appareil selon la revendication 4, caractérisé par le fait que l'élément (51,62) qui possède l'élasticité du caoutchouc, est inséré dans une gorge annulaire (52,61) de l'embout (41), gorge annulaire dans laquelle débouche également la section de conduite (45,53,60).

6. Appareil selon la revendication 5, caractérisé par le fait qu'il est prévu une gorge annulaire (61) en forme de V, contre les parois de laquelle porte un anneau torique (62).

7. Appareil selon la revendication 1, caractérisé par le fait que la soupape (65,66) est disposée dans le canal (56) d'une soupape de dosage (57 à 59) et à l'aide de la-quelle on peut contrôler le débit de l'eau vers la pièce à main.

8. Appareil selon la revendication 7, caractérisé par le fait qu'il est prévu une soupape de dosage avec un tuyau (57) susceptible d'être écrasé et, par voie de conséquence, présentant une section transversale de passage susceptible d'être modifiée, et que dans le tuyau est disposé un insert (65) en un matériau résistant et qui est pourvu d'une surface latérale ou enveloppe cylindrique, et dont le second côté frontal, si l'on regarde dans la direction de l'écoulement, est fermé alors que sa surface latérale comporte une ouverture (66) qui, lorsque la conduite est dépourvue de pression, est obturée par la paroi intérieure du tuyau (57) alors qu'elle est dégagée, lors de l'accroissement de la pression, par suite de l'élasticité du tuyau.

9. Appareil selon la revendication 1, caractérisé par le fait que la soupape (35;5l,52;6l,62;65,66) est disposée dans la section de conduite d'une conduite à liquide (W), dans laquelle est prévu un dispositif (23) à l'aide duquel, en vue d'éviter l'écoulement de liquide, goutte par goutte, au niveau de la sortie de la pièce à main, après l'interruption de l'alimentation en liquide, on obtient, une rétroaspiration d'une partie du liquide qui se trouve dans le tuyau d'alimentation.

FIG 1

FIG 2

FIG 3

FIG 4

FIG 5

FIG 7

FIG 6

FIG 9

FIG 8

FIG 10

EP 0 230 010 B1

FIG 11

FIG 12

FIG 13

FIG 14